# EUROPÄISCHE PATENTSCHRIFT

(11) **EP 1 690 720 B1**
(45) Veröffentlichungstag und Bekanntmachung des Hinweises auf die Patenterteilung: **09.01.2008**
(21) Anmeldenummer: 05025011.7
(22) Anmeldetag: 16.11.2005
(51) Int. Cl.: B60J 10/00, B60J 10/02

(54) **Wasserabflusseinrichtung, insbesondere für von dem Dachbereich eines Fahrzeuges zugeordneten Abdeckteilen**
Water drain, in particular for draining from the panels forming the roof area of a vehicle
Dispositif pour l'évacuation d'eau, notamment pour évacuer l'eau depuis les panneaux formant le toit d'un véhicule

(30) Priorität: 10.02.2005 DE 102005006236
(43) Veröffentlichungstag der Anmeldung: 16.08.2006
(73) Patentinhaber: CTS Fahrzeug-Dachsysteme GmbH, 74321 Bietigheim-Bissingen (DE)
(72) Erfinder: Anders, Jens, 31094 Marienhagen (DE); Parthen, Sabine, 74427 Fichtenberg (DE)
(74) Vertreter: Wittner, Walter

(56) Entgegenhaltungen:
- DE-A1- 19 529 521
- DE-U1- 29 716 657
- US-A- 5 527 081
- PATENT ABSTRACTS OF JAPAN Bd. 015, Nr. 146 (M-1102), 12. April 1991 (1991-04-12) -& JP 03 025028 A (HONDA MOTOR CO LTD), 1. Februar 1991 (1991-02-01)

## Beschreibung

Die Erfindung betrifft eine Wasserabflusseinrichtung, insbesondere für von dem Dachbereich eines Fahrzeuges zugeordneten Abdeckteilen.

Wasserabflusseinrichtungen der vorgenannten Art sind beispielsweise aus der DE 195 29 521 C2 in Verbindung mit Schiebedächern bekannt, die dachseitig in Rahmen geführt sind, welche auch Wasserrinnen bilden, die mit Wasserablaufstutzen versehen sind. Die Stutzen sind in entsprechend ausgeformte Anschlussbereiche der Wasserrinne eingeknüpft und bilden ihrerseits Anschlussstücke für Wasserablaufschläuche, über die das abzuführende Wasser karosserieseitig abgeleitet wird. Eine weitere Wasserabflusseinrichtung wird in US 5 627 081 offenbart.

Sowohl bezüglich der Verbindung zwischen dem jeweiligen Endstück des Ablaufschlauches und dem Anschlussstutzen wie auch bezüglich der Verbindung des Anschlussstutzens zum jeweiligen wasserführenden Teil, also der Wasserrinne, besteht die Gefahr von Leckagen, die insbesondere dann kritisch sind, wenn die Wasserabführung durch insoweit empfindliche Bereiche des Fahrzeuges, so beispielsweise den Fahrzeuginnenraum, den Kofferraum oder dergleichen führt. Ferner sind solche Übergänge oft auch im Hinblick auf Schwitzwasser kritisch.

Der Erfindung liegt die Aufgabe zugrunde, eine Wasserabflusseinrichtung der eingangs genannten Art dahingehend auszugestalten, dass im Umfeld der Verbindung zwischen dem Wasserablauf zugeordneten Anschlussstutzen und anschließendem Ablaufschlauch auftretende Leckagen ohne negative Einflüsse auf die Wasserabflusseinrichtung aufnehmende und/oder von der Wasserabflusseinrichtung durchsetzte Räume bleiben.

Gemäß der Erfindung wird dies mit den Merkmalen des Anspruches 1 erreicht, demzufolge der Ablaufschlauch im Bereich seines mit dem Anschlussstutzen zu verbindenden Endstückes von einem Fangbecher umschlossen ist, der im Bechergrund eine Übertrittsöffnung auf den durch den Anschlussstutzen und den Ablaufschlauch gebildeten Ablaufkanal aufweist. Dadurch lassen sich sowohl in der Verbindung zwischen Anschlussstutzen und mit diesem verbundenem Teil des dachseitig vorgesehenen Wasserablaufes auftretende Leckagen abfangen wie auch Leckagen zwischen dem Anschlussstutzen und dem Endstück des Ablaufschlauches. In entsprechender Weise wird Schwitzwasser abgefangen, falls der Anschlussstutzen zum jeweiligen dachseitigen Wasserablauf in einem Bereich liegt, in dem die Schwitzwasserbildung begünstigende Temperaturverhältnisse herrschen. Ferner kann bei entsprechender Positionierung und/oder Bemessung des sich gegen den Anschlussstutzen öffnenden Fangbechers auch negativen Auswirkungen von Leckagen begegnet werden, die sich durch Stoßstellen zwischen Dichtungen, insbesondere von Dichtungsanordnungen zwischen verschiedenen Dachteilen ergeben, sofern diese Stoßstellen im Bereich des Anschlussstutzens liegen und dadurch vom Fangbecher untergriffen sein können.

Bevorzugt ist der Fangbecher trichterförmig ausgebildet und läuft in einem den Anschlussstutzen mit Abstand umschließenden Rand aus, wobei dieser Rand gegebenenfalls auch dichtlippenartig gestaltet sein kann, um in Verbindung mit angrenzenden Teilen des Fahrzeuges ein den leckagekritischen Bereich umschließendes, im Wesentlichen geschlossenes Fanggefäß zu bilden.

Die Verbindung zwischen den Fangbecher und dem Ablaufschlauch bzw. dessen Endstückes erfolgt zweckmäßigerweise über einen Rohrabschnitt, der mit der zumindest einen Übertrittsöffnung versehen ist, wobei bevorzugt über den Umfang des Rohrabschnittes mehrere Übertrittsöffnungen angeordnet sind. Bevorzugt ist der Rohrabschnitt des Weiteren formsteif ausgebildet, so dass der Fangbecher zum Endstück des Ablaufschlauches lagefest ist. Weiterführend, also gegenüberliegend zum Rohrabschnitt, ist der Wasserablaufschlauch bevorzugt zumindest bereichsweise flexibel ausgestaltet und in seinen flexiblen Bereichen insbesondere als Wellschlauch gestaltet, wobei bereits anschließend an den Fangbecher der Ablaufschlauch als Wellschlauch ausgebildet sein kann.

Eine solche Ausgestaltung einer Wasserabflusseinrichtung erweist sich insbesondere dann als zweckmäßig, wenn der dachseitig vorgesehene Anschlussstutzen im Bereich eines Fahrzeugteiles liegt, der über eine zwischenliegende Dichtungsanordnung an einen weiteren Fahrzeugteil anschließt, wobei als solche Fahrzeugteile bevorzugt die Heckscheibe des hinteren Dachteiles eines Hardtops, die seitlich an die Heckscheibe anschließenden Teile des hinteren Dachteiles und/oder der Heckdeckel in Frage kommen.

Bezogen auf diese Teile erweist sich eine Lage des Anschlussstutzens in einem Eckbereich der Heckscheibe als zweckmäßig, in dem die genannten Teile aneinander angrenzen. Bezogen auf eine derartige Konstellation erweist sich die Anordnung einer Wasserabflusseinrichtung der geschilderten Art an den beiden unteren Ecken der Heckscheibe als eine bevorzugte Lösung, wobei der dachseitig vorgesehene Wasserablauf, von dem der Anschluss ausgeht, bevorzugt in den Rahmen der Heckscheibe integriert ist, der von unten über Dichtungsanordnungen gegen den Heckdeckel und die seitlich zur Heckscheibe angrenzend liegenden Teile des heckseitigen Dachteiles, bezogen auf das geschlossene Hardtop, anliegt.

Weitere Einzelheiten und Merkmale der Erfindung ergeben sich aus den Ansprüchen und der nachfolgenden Beschreibung der Zeichnungen.

### Diese zeigen:

- Fig. 1: eine schematische Darstellung des heckseitigen Dachbereiches eines Fahrzeuges mit offenem Aufbau, dessen zu öffnendes und heckseitig abzulegendes, mehrteiliges Dach als Hardtop ausgestaltet ist,
- Fig. 2: bezogen auf einen Schnitt gemäß II-II in Fig. 1 in stark schematisierter Darstellung den dachseitig vorgesehenen Wasserablauf mit zugeordnetem Anschlussstutzen und von diesem ausgehendem Wasserablaufschlauch, und
- Fig. 3: einen Schnitt gemäß Linie III-III in Fig. 2, wiederum stark schematisiert.

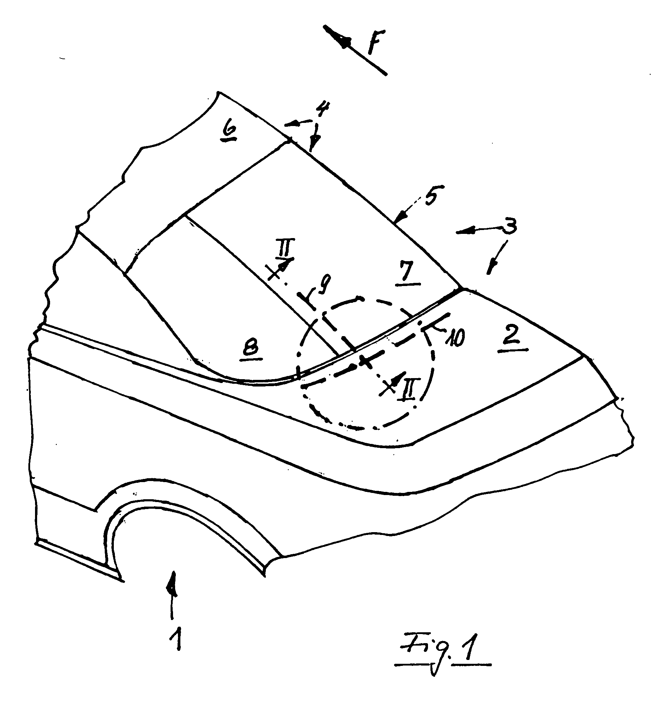

In der Darstellung gemäß Fig. 1 ist von einem Fahrzeug 1, das in seinem karosserieseitigen Aufbau spiegelbildlich zu einer Fahrzeug-Längsmittelebene aufgebaut ist, lediglich ein hinterer längsseitiger Ausschnitt gezeigt, wobei mit 2 der Heckdeckel bezeichnet ist und vom weiteren Dachbereich 3 lediglich die vom Heckdeckel 2 bei geschlossenem Dach nach vorne verlaufenden Abdeckteile gezeigt sind. Die nach vorne an den Heckdeckel 2 anschließenden Abdeckteile bilden Teile eines Hardtops 4, das sich bei geschlossener Dachabdeckung den Insassenraum überspannend zwischen dem Heckdeckel 2 und einer frontseitigen, nicht gezeigten Windschutzscheibe erstreckt. Das nur teilweise dargestellte, mehrteilige Hardtop 4 umfasst ein hinteres, an den Heckdeckel 2 anschließendes Dachteil 5 und zumindest ein in Fahrtrichtung F davor liegendes, vorderes Dachteil 6. Das hintere Dachteil 5 ist durch die Heckscheibe 7 und seitliche Abschlussteile 8 gebildet, wobei die seitlichen Abschlussteile 8 als Dachsäulen gestaltet sind, im Sinne von B-Säulen bei einem zweitürigen und von C-Säulen bei einem dreitürigen Fahrzeug.

In der nicht dargestellten Ablagestellung des Hardtops 4 ist dieses bei für den Ablagevorgang nach hinten oben aufgeschwenktem Heckdeckel 2 in einem vom Heckdeckel 2 überdeckten Ablageraum verstaut. Für das dargestellte Ausführungsbeispiel wird dabei von einer bekannten Faltung des Hardtops ausgegangen, bei der der Heckdeckel 2 in Rückenlage von zumindest einem vorderen Dachteil 6 überdeckt ist, das seine bei geschlossenem Hardtop 4 gegebene Ausrichtung beibehält. In der Ablagestellung ist, bezogen auf das dargestellte Ausführungsbeispiel, die Heckscheibe 7 gegenüber den seitlichen Abschlussteilen 8 in eine gegenüber diesen abgehobene Stellung versetzt und bei geschlossenem Hardtop 4 ist die Heckscheibe 7 über den ihr zugeordneten, randseitig untergreifenden Rahmen unter Zwischenschaltung von Dichtungen von unten gegen die seitlichen Abschlussteile 8 und den Heckdeckel 2 angelegt.

Die Anlage erfolgt über die zwischenliegende Dichtungen, die dem Rahmen der Heckscheibe 7 zugeordnet sind und über die zwischen der Heckscheibe 7, den seitlichen Abschlussteilen 8 und dem Heckdeckel 2 verlaufende Dichtgrenzen gebildet sind, die schematisiert in Fig. 1 als Strichlinien 9 und 10 angedeutet sind.

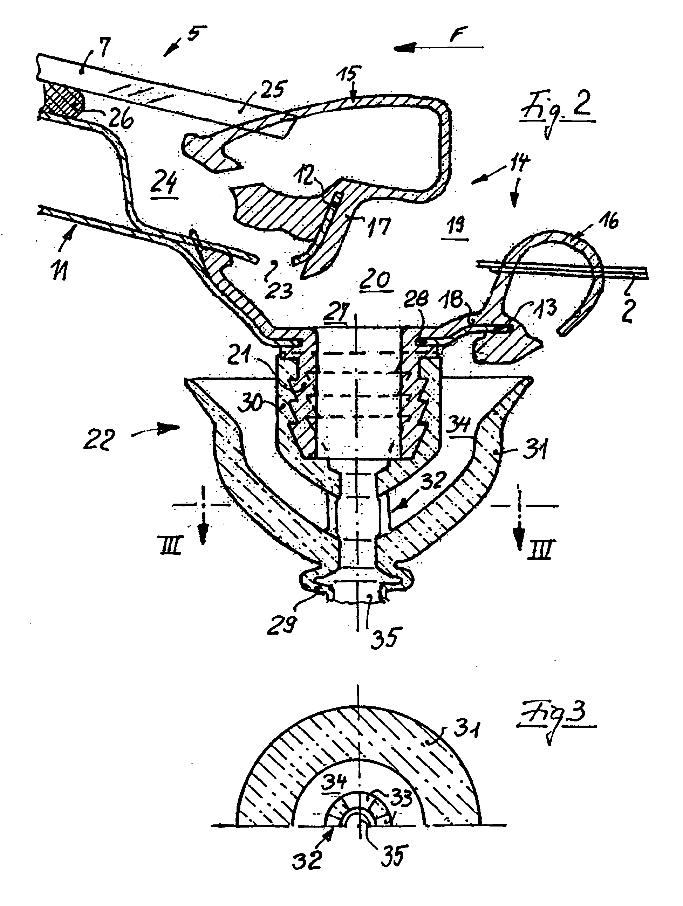

Ausgehend von einer derartigen Grundkonfiguration zeigt Fig. 2 eine schematisierte Schnittdarstellung, in der der die Heckscheibe 7 tragende Rahmen mit 11 bezeichnet ist. Dieser Rahmen 11 untergreift die Heckscheibe 7 und ragt umfangsseitig über diese hinaus, wobei im umfangsseitig auskragenden Bereich Aufsteckränder 12 und 13 für die Dichtung 14 vorgesehen sind. Diese Dichtung 14 hat in der dargestellten, als Ausführungsbeispiel dienenden Ausgestaltung einen im Wesentlichen U-förmigen Querschnitt, so dass sich in Dichtwulsten 15, 16 auslaufende Dichtungsschenkel 17, 18 ergeben, die auf die Aufsteckränder 12, 13 aufgesteckt sind.

Die Dichtwulste 15 und 16 sind in Fig. 2 in ihrer durch Konstruktion und Fertigung vorgegebenen Ursprungsform dargestellt und es ist ersichtlich, dass bei mit dem Rahmen 11 verklebter Heckscheibe 7 (Klebeverbindug 26) und bei geschlossenem Heckdeckel 2 die Heckscheibe 7 mit dem Dichtwulst 15 und der Heckdeckel 2 mit dem Dichtwulst 16 unter Verformung des Dichtwulstes 15 bzw. 16 in dichtender Anlage steht.

Durch die übergreifende Zuordnung von Rahmen 11 und Heckscheibe 7 in Verbindung mit dem gegen die Heckscheibe 7 aufgestellten Aufstellrand 12 für den im Dichtwulst 15 auslaufenden Dichtungsschenkel 17 wird, bezogen auf die Schließlage des Hardtops 4, der Übergangsspalt zwischen Heckscheibe 7 und Heckdeckel 2 zwar weitgehend überdeckt und damit ein optisch weitgehend geschlossener Anschluss der Heckscheibe 7 zum Heckdeckel 2 erreicht. Gleichzeitig wird aber auch ein Abflussspalt 19 im Übergang auf den Heckdeckel 2 geschaffen, der seinerseits in dichtender Verbindung zum Dichtwulst 16 liegt. Der Abflussspalt 19 ermöglicht das Abfangen von über die Heckscheibe 7 abflie-ßendem Wasser und dessen Zuleitung auf den zwischen den Dichtungsschenkeln 17 und 18 liegenden Rinnengrund 20, der im Bereich eines Anschlussstutzens 21 für einen Wasserablauf 22 vertieft ausgebildet ist und auf den im Bereich dieser Vertiefung ein Überlauf 23 von einem Sickerwasserkanal 24 ausmündet, der unterhalb des über die Klebeverbindung 26 der Heckscheibe 7 zum Rahmen 11 auskragenden Heckscheibenrandes 25 durch den in den Aufstellrand 12 auslaufenden Teil des Rahmens 11 gebildet ist.

Der Dichtungsschenkel 17 und der Rahmen 11 sind im Bereich des Überlaufes 23 durchbrochen und der Rahmen 11 ist im Bereich des Überlaufes 23 durch entsprechende Ausformung des auf den Dichtwulst 16 zulaufenden Aufsteckrandes 13 zu einer Fangmulde 27 vertieft. Bei entsprechend angepasster Form der Dichtung 14 im Bereich ihres Rinnengrundes 20 kann der Anschlussstutzen 21 zur Dichtung einstückig ausgebildet sein. Der Anschlussstutzen 21 kann aber auch separat in einen entsprechenden Randbereich 28 des für den Wasserablauf 22 durchbrochenen Aufsteckrand 13 eingeknüpft sein.

Der Anschlussstutzen 21 ist mit einem Ablaufschlauch 29 verbunden. Der Ablaufschlauch 29 weist ein Endstück 30 auf, das den Anschlussstutzen 21 übergreift. Im Ausführungsbeispiel ist das Endstück 30 über eine Sägezahnverbindung formschlüssig verrastend zum Anschlussstutzen 21 festgelegt. Das Endstück 30 ist von einem trichterartigen Fangbecher 31 übergriffen und mit Abstand umgriffen, so dass durch im Bereich des Wasserablaufes 22 auftretende Undichtigkeiten austretendes Wasser abgefangen wird. Die Verbindung zwischen dem Endstück 30 und dem Fangbecher 31 erfolgt über einen den axialen Abstand zwischen Endstück 30 und Fangbecher 31 überbrückenden Rohrabschnitt 32, der durchbrochen ausgeführt ist und Übertrittsöffnungen 33 vom Innenraum 34 des Fangbechers 31 auf den Ablaufkanal 35 aufweist. Der Ablaufkanal 35 ist anschließend an den trichterförmigen Fangbecher 31 durch den Ablaufschlauch 29 gebildet, der zumindest über Teilbereiche seiner Länge bevorzugt als Wellschlauch ausgebildet ist. Die Flexibilität des Ablaufschlauches 29 macht es bei entsprechender Längenbemessung möglich, dass der Wasserablauf ungeachtet der Verbindung zur Heckscheibe 7 bzw. deren Rahmen 11 den Bewegungen der Heckscheibe 7 bzw. deren Rahmens 11 bei der Öffnungs- und Schließbewegung des Hardtops 4 folgen kann.

Die, wie insbesondere aus Fig. 1 ersichtlich, Anordnung des Wasserablaufes 22 im unteren Eckbereich der Heckscheibe 7 angrenzend an den Heckdeckel 2 wie auch angrenzend an ein seitliches Abschlussteil 8 macht es möglich, über den Fangbecher 31 auch den Stoßbereich zwischen Heckdeckel 2, Heckscheibe 7 und seitlichem Abschlussteil 8 zu untergreifen, so dass auch der Anschlussbereich zwischen einer dem Abschlussteil 8 zugeordneten und gegen den Heckdeckel 2 abgrenzenden Dichtung an die der Heckscheibe 7 bzw. deren Rahmen 11 zugeordnete Dichtung untergriffen werden kann, eventuell anfallendes Leckwasser in diesem Bereich also gefangen werden kann. Grundsätzlich besteht auch die Möglichkeit, etwa in der Dichtung zwischen seitlichem Abschlussteil 8 und Heckdeckel 2 gesammeltes Wasser über den Fangbecher 31 dem Wasserablaufkanal 35 zuzuführen.

Als besonders zweckmäßig erweist es sich, wenn die zwischen seitlichem Abschlussteil 8 und Heckdeckel 2 liegende Dichtung auslaufend auf die der Heckscheibe 7 bzw. deren Rahmen 11 zugeordnete Dichtung 14 so gestaltet ist, dass sich bei geschlossenem Hardtop eine Ausrichtung gegen den Ablaufstutzen 21 ergibt. In Berücksichtigung der dichtungsseitigen Gegebenheiten kann der Fangbecher 31 abweichend vom gezeigten Ausführungsbeispiel auch von der Kreisform abweichende Eintrittsquerschnitte, beispielsweise elliptische Querschnitte oder dergleichen, aufweisen.

## Patentansprüche

1. Wasserabflusseinrichtung, insbesondere für von dem Dachbereich (3) eines Fahrzeuges (1) zugeordneten Abdeckteilen, mit einem einem dachseitig vorgesehenen Wasserablauf (22) zugeordneten Anschlussstutzen (21) und einem mit diesem zu verbindenden Ablaufschlauch (29), der über ein Endstück (30) mit dem Anschlussstutzen (21) zu verbinden ist,
**dadurch gekennzeichnet,**
**dass** der Ablaufschlauch (29) im Bereich des Endstückes (30) von einem sich gegen den Anschlussstutzen (21) öffnenden Fangbecher (31) umschlossen ist, der im Bechergrund zumindest eine Übertrittsöffnung (33) auf den durch den Anschlussstutzen (21) und den Ablaufschlauch (29) gebildeten Ablaufkanal (35) aufweist.

2. Wasserabflusseinrichtung nach Anspruch 1,
**dadurch gekennzeichnet,**
**dass** der Fangbecher (31) sich trichterförmig gegen den Anschlussstutzen (21) aufweitet.

3. Wasserabflusseinrichtung nach Anspruch 1 oder 2,
**dadurch gekennzeichnet,**
**dass** der Fangbecher (31) über einen mit wenigstens einer Übertrittsöffnung (33) versehenen Rohrabschnitt (32) des Ablaufschlauches (29) an dessen Endstück (30) angeschlossen ist.

4. Wasserabflusseinrichtung nach Anspruch 3,
**dadurch gekennzeichnet,**
**dass** der Rohrabschnitt (32) formsteif ausgebildet ist.

5. Wasserabflusseinrichtung nach Anspruch 3 oder 4,
**dadurch gekennzeichnet,**
**dass** der Ablaufschlauch (29) dem Rohrstück (32) bezogen auf den Fangbecher (31) gegenüberliegend flexibel ausgebildet ist.

6. Wasserabflusseinrichtung nach einem der Ansprüche 3 bis 5,
**dadurch gekennzeichnet,**
**dass** der flexible Bereich des Ablaufschlauches (29) als Wellschlauch ausgebildet ist.

7. Wasserabflusseinrichtung nach einem der vorhergehenden Ansprüche,
**dadurch gekennzeichnet,**
**dass** der dachseitig vorgesehene Anschlussstutzen (21) in einem Bereich eines Abdeckteiles (Heckscheibe 7) liegt, der über eine zwischenliegende Dichtungsanordnung an einen weiteren Abdeckteil (Heckdeckel 2, seitliches Abschlussteil 8) anschließt.

8. Wasserabflusseinrichtung nach Anspruch 7,
**dadurch gekennzeichnet,**
**dass** als aneinander angrenzende Abdeckteile eine Heckscheibe (7) und ein Heckdeckel (2) vorgesehen sind.

9. Wasserabflusseinrichtung nach Anspruch 7 oder 8,
**dadurch gekennzeichnet,**
**dass** als aneinander angrenzende Abdeckteile eines Fahrzeuges mit einem als Hardtop ausgebildeten Dachbereich eine Heckscheibe (7), ein Heckdeckel (2) und/oder seitliche Abschlussteile (8) eines die Heckscheibe (2) umfassenden hinteren Dachteiles (5) vorgesehen sind.

10. Wasserabflusseinrichtung nach Anspruch 9,
**dadurch gekennzeichnet,**
**dass** der dachseitig vorgesehene Anschlussstutzen (21) in einem Eckbereich der Heckscheibe (2) bzw. des Heckscheibenrahmens (11) angrenzend zum Heckdeckel (2) und zu einem seitlichen Abschlussteil (8) des hinteren Dachteiles (5) liegt.

11. Wasserabflusseinrichtung nach einem der vorhergehenden Ansprüche,
**dadurch gekennzeichnet,**
**dass** der Anschlussstutzen (21) mit einer durch die Dichtungsanordnung zwischen der Heckscheibe (7), dem Heckdeckel (2) und dem seitlichen Anschlussteil (8) des die Heckscheibe (7) umfassenden hinteren Dachteiles (5) begrenzten Wasserführung in Verbindung steht.

12. Wasserabflusseinrichtung nach Anspruch 11,
**dadurch gekennzeichnet,**
**dass** die Wasserführung im Bereich der seitlichen Anschlussteile (8) und des Anschlussstutzens (21) durch einen Abschnitt der Dichtungsanordnung gebildet ist.

## Claims

1. Water drainage system, in particular for draining from cover panels assigned to the roof region (3) of a vehicle (1), comprising a connecting branch pipe (21) assigned to a roof-side water discharge (22), and comprising a discharge hose (29) connected to the latter, which can be connected to the connecting branch pipe (21) by an end piece (30), **characterized in that** the discharge hose (29) is enclosed in the region of the end piece (30) by a collecting cup (31), which opens towards the connecting branch pipe (21) and which in the cup bottom has at least one overflow opening (33) to the discharge duct (35) formed by the connecting branch pipe (21) and the discharge hose (29).

2. Water drainage system according to Claim 1, **characterized in that** the collecting cup (31) widens in the shape of a funnel towards the connecting branch pipe (21).

3. Water drainage system according to Claim 1 or 2, **characterized in that** the collecting cup (31) is connected by a pipe section (32) of the discharge hose (29) to the end piece (30) thereof, which pipe section is provided with at least one overflow opening (33).

4. Water drainage system according to Claim 3, **characterized in that** the pipe section (32) is of dimensionally stable configuration.

5. Water drainage system according to Claim 3 or 4, **characterized in that** the discharge hose (29), lying opposite the pipe section (32) with reference to the collecting cup (31), is of flexible configuration.

6. Water drainage system according to one of Claims 3 to 5, **characterized in that** the flexible region of the discharge hose (29) is configured as a corrugated hose.

7. Water drainage system according to one of the preceding claims, **characterized in that** the roof-side connecting branch pipe (21) lies in a region of a cover panel (rear window 7), which, via an intervening sealing arrangement, adjoins a further cover panel (rear lid 2, lateral end part 8).

8. Water drainage system according to Claim 7, **characterized in that**, as mutually adjacent cover panels, a rear window (7) and a rear lid (2) are provided.

9. Water drainage system according to Claim 7 or 8, **characterized in that**, as mutually adjacent cover panels of a vehicle having a roof region configured as a hard top, a rear window (7), a rear lid (2) and/or lateral end parts (8) of a rear roof panel (5) comprising the rear window (2) are provided.

10. Water drainage system according to Claim 9, **characterized in that** the roof-side connecting branch pipe (21) lies in a corner region of the rear window (2) or of the rear window frame (11) adjacent to the rear lid (2) and to a lateral end part (8) of the rear roof panel (5).

11. Water drainage system according to one of the preceding claims, **characterized in that** the connecting branch pipe (21) is connected to a water guide delimited by the sealing arrangement between the rear window (7), the rear lid (2) and the lateral connecting part (8) of the rear roof panel (5) comprising the rear window (7).

12. Water drainage system according to Claim 11, **characterized in that** the water guide is formed in the region of the lateral connecting parts (8) and of the connecting branch pipe (21) by a portion of the sealing arrangement.

## Revendications

1. Dispositif d'évacuation d'eau, notamment pour des parties de recouvrement associées à la région du toit (3) d'un véhicule (1), comprenant une tubulure de raccordement (21) associée à une évacuation d'eau (22) prévue du côté du toit et un tuyau d'évacuation (29) à connecter à celle-ci, qui doit être connecté à la tubulure de raccordement (21) par le biais d'une partie d'extrémité (30),
**caractérisé en ce que**
le tuyau d'évacuation (29) est entouré dans la région de sa partie d'extrémité (30) par un récipient collecteur (31) s'ouvrant vers la tubulure de raccordement (21), qui présente, au fond du récipient, au moins une ouverture de transfert (33) au canal d'évacuation (35) formé par la tubulure de raccordement (21) et le tuyau d'évacuation (29).

2. Dispositif d'évacuation d'eau selon la revendication 1,
**caractérisé en ce que**
le récipient collecteur (31) s'élargit en forme d'entonnoir vers la tubulure de raccordement (21).

3. Dispositif d'évacuation d'eau selon la revendication 1 ou 2,
**caractérisé en ce que**
le récipient collecteur (31) est raccordé par le biais d'une portion de tube (32) du tuyau d'évacuation (29) pourvue d'au moins une ouverture de transfert (33), à sa partie d'extrémité (30).

4. Dispositif d'évacuation d'eau selon la revendication 3,
**caractérisé en ce que**
la portion de tube (32) est réalisée avec une forme rigide.

5. Dispositif d'évacuation d'eau selon la revendication 3 ou 4,
**caractérisé en ce que**
le tuyau d'évacuation (29) est réalisé par rapport à la portion de tube (32), de manière flexible en face du récipient collecteur (31).

6. Dispositif d'évacuation d'eau selon l'une quelconque des revendications 3 à 5,
**caractérisé en ce que**
la région flexible du tuyau d'évacuation (29) est réalisée sous forme de tuyau ondulé.

7. Dispositif d'évacuation d'eau selon l'une quelconque des revendications précédentes,
**caractérisé en ce que**
la tubulure de raccordement (21) prévue du côté du toit se situe dans une région d'une partie de recouvrement (vitre arrière 7) qui se raccorde par le biais d'un agencement d'étanchéité intermédiaire à une autre partie de recouvrement (capot arrière 2, partie de terminaison latérale 8).

8. Dispositif d'évacuation d'eau selon la revendication 7,
**caractérisé en ce que**
l'on prévoit comme parties de recouvrement adjacentes les unes aux autres une vitre arrière (7) et un capot arrière (2).

9. Dispositif d'évacuation d'eau selon la revendication 7 ou 8,
**caractérisé en ce que**
l'on prévoit comme parties de recouvrement adjacentes les unes aux autres d'un véhicule avec une région de toit réalisée sous forme de hard-top une vitre arrière (7), un capot arrière (2) et/ou des parties de terminaison latérales (8) d'une partie de toit arrière (5) entourant la vitre arrière (7).

10. Dispositif d'évacuation d'eau selon la revendication 9,
**caractérisé en ce que**
la tubulure de raccordement (21) prévue du côté du toit se situe dans une région de coin de la vitre arrière (7) ou du cadre de la vitre arrière (11) adjacente au capot arrière (2) et à une partie de terminaison latérale (8) de la partie de toit arrière (5).

11. Dispositif d'évacuation d'eau selon l'une quelconque des revendications précédentes,
**caractérisé en ce que**
la tubulure de raccordement (21) est en liaison avec une conduite d'eau limitée par l'agencement d'étanchéité entre la vitre arrière (7), le capot arrière (2) et la partie de raccordement latérale (8) de la partie de toit arrière (5) entourant la vitre arrière (7).

12. Dispositif d'évacuation d'eau selon la revendication 11,
**caractérisé en ce que**
la conduite d'eau est formée dans la région des parties de raccordement latérales (8) et de la tubulure de raccordement (21) par une portion de l'agencement d'étanchéité.
